# FASCICULE DE BREVET EUROPEEN

(11) **EP 3 986 752 B1**
(45) Date de publication et mention de la délivrance du brevet: **05.07.2023**
(21) Numéro de dépôt: 20743200.6
(22) Date de dépôt: 10.06.2020
(51) Int. Cl.: B60R 11/02, B60R 13/02, B60R 11/00, B60R 13/00

(54) **GARNITURE DE PORTIÈRE LATÉRALE D'UN VÉHICULE AUTOMOBILE**
SEITENTÜRVERKLEIDUNG EINES KRAFTFAHRZEUGES
SIDE DOOR TRIM OF A MOTOR VEHICLE

(30) Priorité: 24.06.2019 FR 1906785
(43) Date de publication de la demande: 27.04.2022
(73) Titulaire: NOVARES France, 92140 Clamart (FR)
(72) Inventeur: CAZES, Christophe, 78000 VERSAILLES (FR); BOLLIER, François, 06300 NICE (FR); REICHHELD, Frédérick, 06500 MENTON (FR)
(74) Mandataire: Germain Maureau
(86) Numéro de dépôt international: PCT/FR2020/050984
(87) Numéro de publication internationale: WO 2020/260789

(56) Documents cités:
- WO-A1-2018/050263
- JP-A- 2009 006 893
- US-A1- 2018 079 362

## Description

La présente invention porte sur une garniture de porte pour une portière latérale d'un véhicule automobile, plus particulièrement pour une portière arrière d'un véhicule. L'invention concerne également un véhicule automobile comprenant une ou plusieurs portières équipée(s) d'une telle garniture. US2018/079362 A1 divulgue une garniture de porte conformément au préambule de la revendication 1.

L'habitacle d'un véhicule automobile comprend généralement des portières droite et gauche, avant et arrière, destinées à permettre l'entrée et la sortie des passagers dans le, et hors du, véhicule. Dans beaucoup de véhicules, les portières s'ouvrent vers l'extérieur de l'habitacle, en tournant sur leurs gonds.

Ce type d'ouverture présente le danger de heurter un obstacle, mobile ou pas, situé à l'extérieur de l'habitacle du véhicule, au moment de l'ouverture de la portière. En effet, les portières arrière ne sont généralement pas munies de rétroviseurs latéraux, à la différence des portières avant, qui pourraient renseigner les passagers arrière sur l'environnement latéral extérieur du véhicule.

Il subsiste donc le besoin d'un dispositif permettant de renseigner un passager arrière d'un véhicule sur l'état du trafic et/ou de l'environnement extérieur immédiat sur le côté du véhicule où ledit passager s'apprête à ouvrir une portière.

La présente invention vise à remédier à ce besoin.

La présente invention porte sur une garniture de porte d'un véhicule automobile comme décrite par la revendication 1.

Dans la présente demande, les termes « droite » et « gauche » font référence respectivement à des orientations dirigées vers la droite et vers la gauche pour une personne installée sur le siège conducteur du véhicule.

Dans la présente demande, les termes « arrière » et « avant » font référence respectivement à des orientations dirigées vers l'arrière et vers l'avant pour une personne installée sur le siège conducteur du véhicule.

La garniture de porte de l'invention permet à un passager, notamment un passager installé sur un siège arrière du véhicule, d'être renseigné sur l'état du trafic routier latéral et arrière de manière fiable. Grâce à la garniture de porte selon l'invention, un tel passager peut consulter le panneau d'affichage lumineux et s'assurer qu'aucun obstacle susceptible d'entraver l'ouverture de la portière n'est présent, avant de procéder à l'ouverture de la portière. Il peut également ainsi s'assurer que la portière peut être ouverte sans causer un danger, par exemple pour un véhicule ou un vélo qui s'apprêterait à dépasser le véhicule dans lequel il est installé.

La position du panneau d'affichage lumineux, directement au niveau de la partie intérieure de la portière, c'est-à-dire dans la garniture de ladite portière, permet une consultation particulièrement aisée et intuitive pour le passager. Le geste de consulter le panneau d'affichage est complètement naturel et se fait dans le prolongement de l'intention de l'ouverture de la portière.

Par ailleurs, la caméra située à l'emplacement du rétroviseur latéral permet d'afficher sur le panneau d'affichage une image du trafic routier latéral et arrière dont est exclu l'angle mort habituellement présent avec des rétroviseurs classiques. Elle permet également de restituer une image non brouillée par les conséquences de phénomènes naturels pouvant constituer une gêne à la vue avec les rétroviseurs classiques, telles que les gouttes de pluie ou la buée due au brouillard, adhérant à la surface des miroirs de ces rétroviseurs.

Dans une forme de réalisation, le panneau d'affichage lumineux comprend un support d'affichage flexible.

Le support d'affichage flexible convenant à la présente invention permet de transmettre des informations au moyen d'un affichage de type OLCD (Organic Liquid Crystal Display ou Affichage par cristaux liquides organiques) par exemple, ou LCD Liquid Crystal Display), LED (Light-Emitting Diode), OLED (Organic Light-Emitting Diode), AMOLED (Active Matrix Light-Emitting Diode) ou encore QLED (Quantum Light-Emitting Diode). Par exemple, le support d'affichage est une dalle électronique possédant une forme tridimensionnelle courbe. Une telle dalle électronique de forme tridimensionnelle courbe permet de réaliser un panneau d'affichage lumineux faisant saillie de la garniture de porte, de sorte que le passager n'a pas à tourner la tête à 90° vers la porte, par rapport à la direction avant, afin de consulter le panneau d'affichage. Ainsi, la consultation du panneau d'affichage est naturelle et conviviale.

Par exemple, le panneau d'affichage lumineux peut être intégré dans un support de façade formant au moins une partie de la garniture.

Le support d'affichage flexible peut être muni sur sa face externe d'un écran de protection transparent ou translucide possédant une forme tridimensionnelle courbe. En particulier, la forme tridimensionnelle courbe de l'écran de protection peut correspondre à la forme tridimensionnelle courbe de la face externe du support d'affichage flexible.

L'écran de protection permet d'éviter une détérioration prématurée du support d'affichage, tel que la dalle électronique, du fait des chocs ou contacts pouvant se produire lors de l'utilisation du véhicule, en particulier, lors de l'ouverture et/ou de la fermeture de la portière. Un tel écran de protection peut par exemple être réalisé en verre ou en matière plastique injectée, notamment en poly-méthacrylate de méthyle (PMMA) ou en polycarbonate (PC).

L'écran de protection peut être fixé sur la face externe du support d'affichage flexible, par exemple de la dalle électronique de forme tridimensionnelle courbe, au moyen d'une couche adhésive transparente, telle qu'un film de colle optique transparente, de type OCA (Optically Clear Adhesive).

La face externe dudit écran de protection peut présenter une finition anti-reflet et/ou anti-trace de doigts. Une telle finition permet un confort d'utilisation du panneau d'affichage lumineux pour l'utilisateur.

La face externe de l'écran de protection peut être recouverte d'une couche sensible au toucher (par exemple capacitive, résistive ou piézo-électrique), par exemple transparente. Une telle couche sensible au toucher présente sur l'écran de protection confère à l'image affichée une clarté optimale ainsi qu'un confort d'utilisation du panneau d'affichage pour l'utilisateur. Ce dernier peut ainsi par exemple réaliser un zoom de l'image en simplement touchant l'écran avec son doigt à l'endroit désiré, par exemple pour voir plus précisément un obstacle potentiel à l'ouverture de la portière.

Le support d'affichage flexible, par exemple la dalle électronique de forme tridimensionnelle courbe, peut être équipé d'une unité de commande électronique réalisant un traitement de l'image envoyée par la caméra. Par exemple, l'unité de commande électronique peut traiter l'image afin d'en supprimer des éléments inutiles à l'information désirée par l'utilisateur. L'unité de commande électronique peut le cas échéant être reliée à d'autres unités de commande du véhicule.

Le support d'affichage flexible, par exemple la dalle électronique de forme tridimensionnelle courbe, peut être muni sur sa face interne d'un panneau diffuseur de lumière configuré pour rétroéclairer la face externe dudit support d'affichage flexible. Un tel rétroéclairage du support d'affichage flexible permet un confort d'utilisation amélioré, par exemple de nuit.

Conformément à l'invention, la garniture de porte comprend un pavé tactile distinct du panneau d'affichage lumineux, ledit pavé tactile étant configuré pour pointer des éléments sur l'image affichée par ledit panneau d'affichage lumineux. Par exemple, le pavé tactile peut être situé sur une poignée configurée pour autoriser l'ouverture et la fermeture de ladite portière. Ainsi, l'utilisation du panneau d'affichage lumineux est particulièrement intuitive. Au moment où un passager arrière désirant ouvrir la portière saisit la poignée de commande d'ouverture de la portière et commence à tourner son regard vers ladite portière, il peut en même temps utiliser son pouce ou un autre doigt pour opérer le pavé tactile situé sur la poignée afin de consulter l'information désirée sur le panneau d'affichage lumineux qui se trouve alors naturellement dans la direction de son regard.

Le panneau d'affichage et éventuellement le pavé tactile peuvent également être utilisés pour transmettre toute autre sorte d'informations au(x) passager(s) arrière, telles que des informations relatives à l'habitacle du véhicule, température, qualité de l'air, ou des informations multimedia, telles que des chaînes de radio, de télévision, des jeux, interactifs ou non, etc...

La garniture de porte selon l'invention permet de fournir une interface utilisateur dédiée pour un passager arrière d'un véhicule, agréable et pratique à utiliser, facile à prendre en main et ergonomique tout en respectant le design de l'habitacle.

La garniture de porte selon l'invention peut comprendre une ou plusieurs des caractéristiques décrites ci-dessus, prises isolément ou en combinaison.

L'invention concerne également un véhicule automobile comprenant au moins une portière équipée d'une garniture de porte telle que décrite ci-dessus.

D'autres aspects et avantages de l'invention apparaîtront à la lecture de la description qui suit, donnée à titre d'exemple et faite en référence aux dessins annexés, dans lesquels :
Fig. 1 est une vue en perspective de dessus d'un habitacle de véhicule comprenant une portière équipée d'une garniture de porte selon l'invention,
Fig. 2 est une vue en perspective d'une caméra utilisable avec la garniture de porte de la figure 1,
Fig. 3 est une vue partielle de face de la garniture de porte de la figure 1,
Fig. 4 est une vue en perspective éclatée du panneau d'affichage lumineux de la garniture de porte de la figure 1.

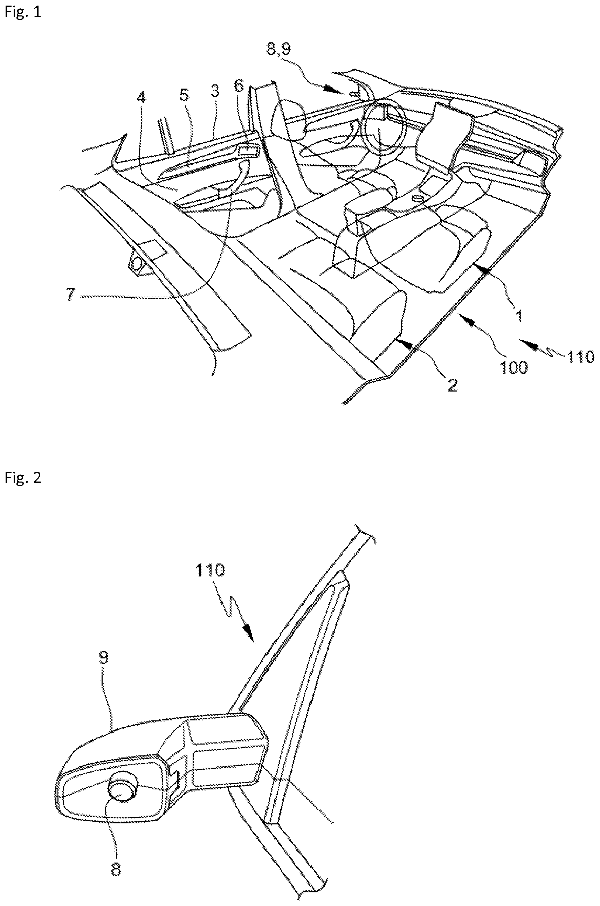

En référence à la figure 1, est représenté partiellement l'habitacle 100 d'un véhicule automobile 110. L'habitacle 100 comprend deux sièges avant 1 et des sièges passagers arrière 2. Sur la figure 1, est représentée la portière arrière gauche 3 permettant l'entrée et la sortie des passagers arrière. La portière arrière gauche 3 est munie d'une garniture 4 de porte selon l'invention. Comme il apparaît de cette figure, la garniture 4 de porte est configurée pour habiller la partie interne de la portière 3.

Dans la description qui suit, une garniture de porte selon l'invention est décrite pour une portière gauche. Cette description est également valable pour une garniture de porte d'une portière droite.

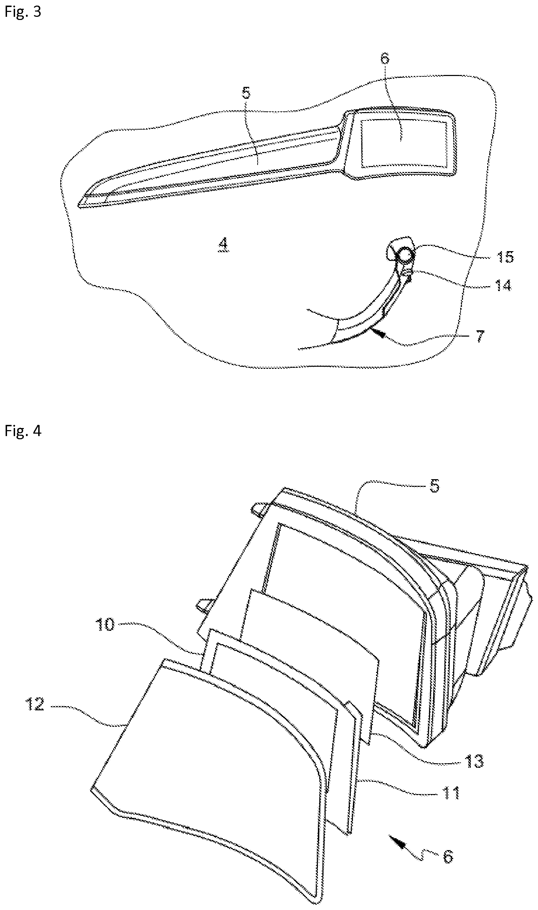

La garniture 4 de porte comprend une façade externe 5, par exemple obtenue par moulage injection de matière plastique, dans laquelle est intégré un panneau d'affichage lumineux 6. La garniture 4 de porte comprend également une poignée 7 configurée pour pouvoir être prise en main par un passager installé à l'arrière du véhicule. La poignée 7 (voir aussi Figure 3) comprend un bouton 14 permettant l'ouverture de la portière 3.

En référence aux figures 1 et 2, le panneau d'affichage lumineux 6 est relié, par exemple de manière filaire, à une caméra 8 située à l'emplacement du rétroviseur extérieur latéral gauche 9 du véhicule 110. Comme il apparaît de la figure 2, la caméra 8 est orientée afin de prendre une image de l'environnement latéral arrière gauche du véhicule 110. Le panneau d'affichage lumineux 6 est configuré pour afficher l'image captée par la caméra 8.

La caméra 8 du véhicule 110 permet d'afficher sur le panneau d'affichage lumineux 6 une image du trafic routier latéral et arrière dont est exclu tout angle mort. La caméra 8 permet également de restituer sur le panneau d'affichage lumineux 6 une image nette, même en temps de pluie ou de brouillard.

En référence aux figures 1, 3 et 4, le panneau d'affichage 6 comprend un support d'affichage flexible 10. Le support d'affichage flexible 10 peut par exemple être une dalle électronique de forme tridimensionnelle courbe. La dalle électronique formant le support d'affichage flexible 10 peut par exemple être une plaque conformable constituée de plastique uniquement. La plaque peut être apte à être courbée selon un rayon de courbure allant jusqu'à 80 mm. La plaque peut par exemple présenter une épaisseur d'environ 130 µm. Une telle plaque peut aisément être réalisée par injection de matière plastique pour permettre des formes variées et/ou pour être munie d'évidements traversant. Le support d'affichage flexible 10 permet de transmettre des informations lumineuses à l'attention du passager arrière au moyen d'un affichage de type OLCD (Organic Liquid Crystal Display).

Le support d'affichage flexible 10 est équipé d'une unité de commande électronique (ECU) 11. L'unité de commande électronique 11 réalise un traitement de l'image envoyée par la caméra 8 (voir figure 2) au support d'affichage flexible 10. En fonction des signaux électroniques reçus, par exemple de la caméra 8, le support d'affichage flexible 10 délivrera un message lumineux spécifique qui sera visible par le passager arrière depuis l'habitacle 100 du véhicule 110 (voir figure 1). En particulier, le message lumineux qui s'affichera renseignera le passager arrière sur l'état du trafic routier latéral gauche et arrière et sur l'état de l'environnement extérieur immédiat du véhicule.

Le support d'affichage flexible 10 est muni sur sa face externe d'un écran de protection 12. L'écran de protection 12 est transparent ou translucide et il possède également une forme tridimensionnelle courbe complémentaire de celle du support d'affichage flexible 10.

L'écran de protection 12 permet d'éviter une détérioration prématurée du support d'affichage flexible 10. Un tel écran de protection 12 peut par exemple être réalisé en verre ou en matière plastique injectée, notamment en poly-méthacrylate de méthyle (PMMA) ou en polycarbonate (PC).

L'écran de protection 12 peut être fixé au support d'affichage flexible 10 au moyen d'une couche adhésive transparente, par exemple un film de colle optique transparente, de type OCA (Optically Clear Adhesive), par exemple par lamination.

La face externe de l'écran de protection 12 peut présenter une finition anti-reflet et/ou anti-trace de doigts. Une telle finition permet un confort d'utilisation du panneau d'affichage lumineux 6 pour l'utilisateur.

La face externe de l'écran de protection 12 peut être recouverte d'une couche sensible au toucher (par exemple capacitive, résistive ou piézo-électrique). Une telle couche sensible au toucher présente sur l'écran de protection 12 confère à l'image affichée une clarté optimale ainsi qu'un confort d'utilisation du panneau d'affichage 6 pour l'utilisateur. En effet, grâce à la présence de la couche sensible au toucher, l'écran 12 forme une interface interactive. Le passager arrière peut ainsi par exemple réaliser un zoom de l'image en simplement touchant l'écran 12 avec son doigt à l'endroit désiré.

En référence à la figure 4, le support d'affichage flexible 10 est muni sur sa face interne d'un panneau diffuseur de lumière 13. Le panneau diffuseur de lumière 13 est configuré pour rétroéclairer la face externe du support d'affichage flexible 10. Ainsi, le panneau diffuseur de lumière 13 peut comprendre une source lumineuse, par exemple une LED, et un panneau réflecteur pour renvoyer la lumière de la source lumineuse vers la face externe du support d'affichage flexible 10. Un tel rétroéclairage du support d'affichage permet un confort d'utilisation amélioré, en particulier lors d'une circulation de nuit.

En référence à la figure 3, la poignée 7 comprend un pavé tactile 15 configuré pour pointer des éléments sur l'image affichée par le panneau d'affichage lumineux 6. Sur l'exemple représenté, le pavé tactile 15 est situé à proximité du bouton 14 permettant l'ouverture de la portière 3.

Ainsi, l'utilisation du panneau d'affichage lumineux est particulièrement intuitive. Lorsque le véhicule 110 est à l'arrêt et que le passager arrière souhaite sortir du véhicule par la portière arrière gauche 3, il peut saisir la poignée 7 avec sa main gauche, de sorte que son pouce se trouve en regard du pavé tactile 15. Il peut alors aisément manipuler le pavé tactile 15 avec son pouce afin de consulter l'information qu'il souhaite recevoir sur l'état de la circulation sur le côté gauche et arrière du véhicule sur le panneau d'affichage lumineux 6. Si nécessaire, il peut ainsi mouvoir son pouce sur le pavé tactile 15 afin de faire un zoom sur un endroit particulier de l'image affichée sur le panneau d'affichage lumineux ou pour décaler cette image.

Lorsque le passager est assuré qu'aucun obstacle ne risque d'entraver l'ouverture de la portière 3, il peut alors tout naturellement actionner le bouton 14 d'ouverture de la portière 3 en toute confiance.

Le panneau d'affichage 6 et éventuellement le pavé tactile 15 peuvent également être utilisés pour transmettre toute autre sorte d'informations au(x) passager(s) arrière, telles que des informations relatives à l'habitacle du véhicule, température, qualité de l'air, ou des informations multimedia, telles que des chaînes de radio, de télévision, des jeux, interactif sou non, etc...

La garniture de porte selon l'invention permet à un passager arrière de procéder à l'ouverture de la portière en toute sécurité, sans risque de causer un dommage à un véhicule ou tout autre moyen de transport mobile circulant à proximité du véhicule. La garniture de porte selon l'invention permet en outre de fournir une interface utilisateur dédiée pour un passager arrière d'un véhicule, agréable et pratique à utiliser, facile à prendre en main et ergonomique tout en respectant le design de l'habitacle.

## Revendications

1. Garniture (4) de porte d'un véhicule automobile (110) configurée pour habiller une portière (3) située sur un côté dudit véhicule, ladite garniture (4) de porte étant **caractérisée en ce qu'**elle comprend un panneau d'affichage lumineux (6) relié à une caméra (8) située à l'emplacement du rétroviseur extérieur latéral du véhicule (110) situé sur le même côté du véhicule que ladite portière, ledit panneau d'affichage lumineux (6) étant apte à afficher l'image captée par ladite caméra (8), et **en ce qu'**elle comprend en outre un pavé tactile (15) distinct dudit panneau d'affichage lumineux (6), ledit pavé tactile (15) étant configuré pour pointer des éléments sur l'image affichée par ledit panneau d'affichage lumineux (6).

2. Garniture (4) de porte selon la revendication 1, **caractérisée en ce que** ledit panneau d'affichage lumineux (6) comprend un support d'affichage flexible (10).

3. Garniture (4) de porte selon la revendication 2, **caractérisée en ce que** ledit panneau d'affichage lumineux (6) est intégré dans un support de façade (5) formant au moins une partie de ladite garniture (4).

4. Garniture (4) de porte selon l'une des revendications 2 à 3, **caractérisée en ce que** ledit support d'affichage flexible (10) est une dalle électronique possédant une forme tridimensionnelle courbe.

5. Garniture (4) de porte selon la revendication 4, **caractérisée en ce que** ledit support d'affichage flexible (10) est muni sur sa face externe d'un écran de protection (12) transparent ou translucide possédant une forme tridimensionnelle courbe.

6. Garniture (4) de porte selon la revendication 5, **caractérisée en ce que** ledit écran de protection (12) est fixé sur la face externe dudit support d'affichage flexible (10) au moyen d'une couche adhésive transparente.

7. Garniture (4) de porte selon la revendication 5 ou 6, **caractérisée en ce que** la face externe dudit écran de protection (12) présente une finition anti-reflet et/ou anti-trace de doigts.

8. Garniture (4) de porte selon l'une quelconque des revendications 5 à 7, **caractérisée en ce que** la face externe de l'écran de protection (12) est recouverte d'une couche sensible au toucher.

9. Garniture (4) de porte selon l'une quelconque des revendications 2 à 8, **caractérisée en ce que** le support d'affichage flexible (10) est équipé d'une unité de commande électronique (11) réalisant un traitement de l'image envoyée par la caméra (8).

10. Garniture (4) de porte selon l'une quelconque des revendications 3 à 9, **caractérisée en ce que** le support d'affichage flexible (10) est muni sur sa face interne d'un panneau diffuseur de lumière (13) configuré pour rétroéclairer la face externe dudit support d'affichage flexible (10).

11. Garniture (4) de porte selon l'une quelconque des revendications 1 à 10, **caractérisée en ce que** ledit pavé tactile (15) est situé sur une poignée (14) configurée pour autoriser l'ouverture et la fermeture de ladite portière (3).

12. Véhicule automobile (110) comprenant au moins une portière (3) équipée d'une garniture (4) de porte selon l'une quelconque des revendications 1 à 11.

## Patentansprüche

1. Türverkleidung (4) eines Kraftfahrzeugs (110), die konfiguriert ist, um eine Wagentür (3) zu verkleiden, die sich auf einer Seite des Fahrzeugs befindet, wobei die Türverkleidung (4) **dadurch gekennzeichnet ist, dass** sie eine Leuchtanzeigetafel (6) umfasst, die mit einer Kamera (8) verbunden ist, die sich an der Stelle des seitlichen Außenrückspiegels des Fahrzeugs (110) befindet, der sich auf derselben Seite des Fahrzeugs befindet, wie die Wagentür, wobei die Leuchtanzeigetafel (6) imstande ist, das von der Kamera (8) erfasste Bild anzuzeigen, und dadurch, dass sie weiter ein Touchpad (15) umfasst, das sich von der Leuchtanzeigetafel (6) unterscheidet, wobei das Touchpad (15) konfiguriert ist, um auf Elemente im Bild zu zeigen, das durch die Leuchtanzeigetafel (6) angezeigt wird.

2. Türverkleidung (4) nach Anspruch 1, **dadurch gekennzeichnet, dass** die Leuchtanzeigetafel (6) einen flexiblen Anzeigeträger (10) umfasst.

3. Türverkleidung (4) nach Anspruch 2, **dadurch gekennzeichnet, dass** die Leuchtanzeigetafel (6) in einen Fassadenträger (5) integriert ist, der mindestens einen Teil der Verkleidung (4) bildet.

4. Türverkleidung (4) nach einem der Ansprüche 2 bis 3, **dadurch gekennzeichnet, dass** der flexible Anzeigeträger (10) eine Elektronikplatte ist, die eine gekrümmte dreidimensionale Form besitzt.

5. Türverkleidung (4) nach Anspruch 4, **dadurch gekennzeichnet, dass** der flexible Anzeigeträger (10) auf seiner Außenseite mit einer durchsichtigen oder durchscheinenden Schutzscheibe (12) versehen ist, die eine gekrümmte dreidimensionale Form besitzt.

6. Türverkleidung (4) nach Anspruch 5, **dadurch gekennzeichnet, dass** die Schutzscheibe (12) anhand einer durchsichtigen Haftschicht an der Außenseite des flexiblen Anzeigeträgers (10) fixiert ist.

7. Türverkleidung (4) nach Anspruch 5 oder 6, **dadurch gekennzeichnet, dass** die Außenseite der Schutzscheibe (12) eine Entspiegelungs- und/oder Anti-Fingerprint-Verarbeitung aufweist.

8. Türverkleidung (4) nach einem der Ansprüche 5 bis 7, **dadurch gekennzeichnet, dass** die Außenseite der Schutzscheibe (12) mit einer berührungsempfindlichen Schicht überzogen ist.

9. Türverkleidung (4) nach einem der Ansprüche 2 bis 8, **dadurch gekennzeichnet, dass** der flexible Anzeigeträger (10) mit einer elektronischen Steuereinheit (11) ausgerüstet ist, die eine Verarbeitung des Bildes durchführt, das von der Kamera (8) gesendet wird.

10. Türverkleidung (4) nach einem der Ansprüche 3 bis 9, **dadurch gekennzeichnet, dass** der flexible Anzeigeträger (10) an seiner Innenseite mit einer Lichtdiffusorplatte (13) versehen ist, die konfiguriert ist, um die Außenseite des flexiblen Anzeigeträgers (10) zu hinterleuchten.

11. Türverkleidung (4) nach einem der Ansprüche 1 bis 10, **dadurch gekennzeichnet, dass** sich das Touchpad (15) auf einem Griff (14) befindet, der konfiguriert ist, um das Öffnen und Schließen der Wagentür (3) zuzulassen.

12. Kraftfahrzeug (110), umfassend mindestens eine Wagentür (3), die mit einer Türverkleidung (4) nach einem der Ansprüche 1 bis 11 ausgerüstet ist.

## Claims

1. A door trim (4) of a motor vehicle (110) configured to cover a door (3) located on one side of said vehicle, said door trim (4) being **characterized in that** it comprises a luminous display panel (6) connected to a camera (8) located at the location of the lateral exterior mirror of the vehicle (110) located on the same side of the vehicle as said door, said luminous display panel (6) being able to display the image captured by said camera (8), and **in that** it further comprises a touchpad (15) distinct from said luminous display panel (6), said touchpad (15) being configured to point out elements on the image displayed by said luminous display panel (6).

2. The door trim (4) according to claim 1, **characterized in that** said luminous display panel (6) comprises a flexible display support (10).

3. The door trim (4) according to claim 2, **characterized in that** said luminous display panel (6) is integrated in a front support (5) forming at least part of said trim (4).

4. The door trim (4) according to any of claims 2 to 3, **characterized in that** said flexible display support (10) is an electronic panel having a curved three-dimensional shape.

5. The door trim (4) according to claim 4, **characterized in that** said flexible display support (10) is provided on its outer face with a transparent or translucent protective screen (12) having a curved three-dimensional shape.

6. The door trim (4) according to claim 5, **characterized in that** said protective screen (12) is fixed to the outer face of said flexible display support (10) by means of a transparent adhesive layer.

7. The door trim (4) according to claim 5 or 6, **characterized in that** the outer face of said protective screen (12) has an anti-reflective and/or anti-fingerprint finish.

8. The door trim (4) according to any one of claims 5 to 7, **characterized in that** the outer face of the protective screen (12) is covered with a touch-sensitive layer.

9. The door trim (4) according to any one of claims 2 to 8, **characterized in that** the flexible display support (10) is equipped with an electronic control unit (11) carrying out a processing of the image sent by the camera (8).

10. The door trim (4) according to any one of claims 3 to 9, **characterized in that** the flexible display support (10) is provided on its inner face with a light-diffusing panel (13) configured to backlighting the outer face of said flexible display support (10).

11. The door trim (4) according to any one of claims 1 to 10, **characterized in that** said touchpad (15) is located on a handle (14) configured to allow the opening and closing of said door (3).

12. A motor vehicle (110) comprising at least one door (3) equipped with a door trim (4) according to any one of claims 1 to 11.
